# EUROPÄISCHE PATENTSCHRIFT

(11) **EP 1 702 834 B1**
(45) Veröffentlichungstag und Bekanntmachung des Hinweises auf die Patenterteilung: **09.07.2008**
(21) Anmeldenummer: 06101015.3
(22) Anmeldetag: 30.01.2006
(51) Int. Cl.: B62D 25/08

(54) **Träger für die Fronteinheit eines Kraftfahrzeuges und Montageverfahren**
Support for the front module of a vehicle and mounting method
Dispositif de support pour l'ensemble de bloc avant de véhicule automobile et procédé de montage

(30) Priorität: 18.03.2005 DE 102005013107
(43) Veröffentlichungstag der Anmeldung: 20.09.2006
(60) Teilanmeldung: 08102673.4
(73) Patentinhaber: Faurecia Kunststoffe Automobilsysteme GmbH, 85057 Ingolstadt (DE)
(72) Erfinder: Clapie, Yann, 85055, Etting (DE)
(74) Vertreter: Richardt, Markus Albert

(56) Entgegenhaltungen:
- EP-A1- 1 232 932
- DE-A1- 10 228 464

## Beschreibung

Die Erfindung betrifft einen Träger für die Fronteinheit eines Kraftfahrzeugs und ein Verfahren zur Montage eines solchen Trägers.

Aus dem Stand der Technik sind verschiedene Fronteinheiten und Montageverfahren für Fronteinheiten bekannt.

Die EP 1 232 932 A1, von der die Erfindung als nächst kommenden Stand der Technik ausgeht, zeigt einen Träger für die Fronteinheit eines Kraftfahrzeugs mit einem Trägerteil zur Verbindung mit den Kotflügeln und dem Fahrgestell des Kraftfahrzeugs (vgl. die Trägerteile 7 und 13 der Figuren 1 und 2 der EP 1 232 932 A1). An dem Trägerteil wird ein Fassungsteil zur Aufnahme einer Scheinwerfereinheit und zur Verbindung mit einem Stoßfänger befestigt (vgl. hierzu das Fassungsteil 43, die Scheinwerfereinheit 21, den Stoßfänger 19 und die Führung 45 zur Befestigung des Fassungsteils an dem Trägerteil, wie in den Figuren der EP 1 232 932 A1 dargestellt).

Bei dem aus der EP 1 232 932 A1 bekannten Stand der Technik tritt das Problem auf, dass aufgrund der relativ großen Maßtoleranzen des Rohbaus einer Kraftfahrzeugkarosserie, an der die Fronteinheit zu montieren ist, bei der Montage Passungsprobleme auftreten können. Hierdurch kann das sogenannte Fugenbild, insbesondere hinsichtlich der Fugen zwischen dem Stoßfänger und der Scheinwerfereinheit und zwischen der Scheinwerfereinheit und der Frontklappe, sowie zwischen dem Stoßfänger und der Frontklappe beeinträchtigt werden.

Weitere ähnliche Fronteinheiten sind aus der FR 2 809 061 und der DE 199 46 995 A1 bekannt geworden.

Ferner ist aus der DE 600 00 006 T2 ein Frontzusammenbau für ein Fahrzeug mit einer Tragstruktur und einem Scheinwerfer bekannt, wobei der Scheinwerfer an der Tragstruktur zwischen einer vormontierten und einer endmontierten Position um eine geneigte Achse drehbar befestigt ist.

Aus der EP 1 036 730 A2 ist ein Verfahren zur toleranzgenauen Montage von Bestandteilen eines Kraftfahrzeug-Vorderwagens bekannt. Hierbei kann eine Vielzahl von sich gegenseitig beeinflussenden Toleranzen berücksichtigt werden.

Der Erfindung liegt dem gegenüber die Aufgabe zu Grunde, einen verbesserten Träger für die Fronteinheit eines Kraftfahrzeugs, eine Fronteinheit sowie ein verbessertes Montageverfahren für die Fronteinheit eines Kraftfahrzeugs zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Die Erfindung schafft einen Träger für die Fronteinheit eines Kraftfahrzeugs mit einem ersten Trägerteil zur Verbindung mit einem Fahrgestell des Kraftfahrzeugs und linken und rechten Fassungsteilen, wobei die linken und rechten Fassungsteile jeweils zur Aufnahme einer Scheinwerfereinheit und zur Verbindung mit einem Stoßfänger des Kraftfahrzeugs ausgebildet sind. Erfindungsgemäß werden die Fassungsteile durch elastische Elemente mit dem ersten Trägerteil verbunden. Ferner sind Mittel zur Fixierung der elastischen Elemente relativ zu dem Fahrgestell vorgesehen, wenn sich die elastischen Elemente nach einer elastischen Deformation in einer Montageposition befinden.

Die elastischen Elemente des erfindungsgemäßen Trägers ermöglichen einen Toleranzausgleich bei der Montage der Fronteinheit. Dadurch lässt sich trotz der relativ großen Maßtoleranzen des Rohbaus eines Kraftfahrzeugs, welche im Millimeterbereich liegen können, ein qualitativ hochwertiges Fugenbild erreichen. Aufwendige Nacharbeiten während der Montage können dadurch entfallen.

Nach einer Ausführungsform der Erfindung werden die elastischen Elemente mittels einer Schraubverbindung an dem ersten Trägerteil oder an dem Fahrgestell fixiert, nachdem die Fronteinheit in eine Montageposition gebracht worden ist und dort einer Deformationskraft ausgesetzt ist. Durch die Fixierung verbleiben die elastischen Elemente in dieser Deformationsposition, auch dann, wenn die Deformationskraft nicht mehr wirkt.

Nach einer Ausführungsform der Erfindung weisen die elastischen Elemente eine Auflage für eine Frontklappe eines Kraftfahrzeugs auf, so dass die Deformationskraft bei geschlossener Frontklappe auf die elastischen Elemente wirkt. Durch Schließen der Frontklappen wirkt also eine Deformationskraft im Wesentlichen in vertikaler Richtung auf die elastischen Elemente, welche diese deformiert. In dieser Deformationsposition werden die elastischen Elemente fixiert.

Nach einer Ausführungsform der Erfindung sind die elastischen Elemente so ausgebildet, dass unter Berücksichtigung der Maßtoleranzen des Kraftfahrzeugrohbaus und der Frontklappe bei geschlossener Frontklappe in jedem Fall eine Deformationskraft von der Frontklappe auf die elastischen Elemente ausgeübt wird. Hierzu können die elastischen Elemente so ausgebildet sein, dass sie etwas in Richtung auf die Frontklappe nach oben hervorstehen.

Nach der Erfindung sind die elastischen Elemente parallelogrammartig ausgebildet. Vorzugsweise schließen die aufeinander stehenden Schenkel der elastischen Elemente einen Winkel von > 90° vor einer Deformation ein. Dadurch wird erreicht, dass die elastischen Elemente etwas nach oben hervorstehen, so dass bei Schließen der Frontklappe in jedem Fall eine Deformationskraft auf die elastischen Elemente ausgeübt wird.

Nach einer Ausführungsform der Erfindung ist ein Schenkel eines Schenkelpaars der elastischen Elemente mit dem ersten Trägerteil verbunden. Der gegenüberliegende zweite Schenkel dieses Schenkelpaars dient zur Verbindung mit einem der Fassungsteile. Dagegen dient ein Schenkel des anderen Schenkelpaars zur Einleitung der Deformationskraft.

Nach einer Ausführungsform der Erfindung ist an den parallelogrammartigen elastischen Elementen jeweils eine Aufnahme für eine Schraubverbindung angeordnet, um die elastischen Elemente in ihrer Deformationsposition zu fixieren.

Nach einer weiteren Ausführungsform der Erfindung sind die Fassungsteile an dem ersten Trägerteil über weitere elastische Elemente befestigt, wobei die weiteren elastischen Elemente für eine elastische Deformation im wesentlichen senkrecht zu der Richtung der elastischen Deformation der elastischen Elemente ausgebildet sind. Hierdurch kann ein weiterer Toleranzausgleich zum Beispiel in seitlicher, das hießt y-Richtung, geschaffen werden. Eines der weiteren elastischen Elemente kann beispielsweise zwischen einem der Fassungsteile und dem elastischen Element und / oder zwischen dem elastischen Element und dem ersten Trägerteil angeordnet sein.

In einem weiteren Aspekt betrifft die Erfindung eine Fronteinheit für ein Kraftfahrzeug mit einem erfindungsgemäßen Träger, einem hieran befestigten Stoßfänger und Scheinwerfereinheiten.

In einem weiteren Aspekt betrifft die Erfindung ein Verfahren zur Montage eines Trägers für eine Fronteinheit mit folgenden Schritten:
- Montage eines ersten Trägerteils des Trägers an einem Fahrgestell des Kraftfahrzeugs,
- elastische Deformation eines elastischen Elements des Trägers durch Schließen einer Frontklappe des Kraftfahrzeugs,
- Fixierung des elastischen Elements in seiner Deformationsposition.
   Nach einer Ausführungsform der Erfindung erfolgt die Fixierung des elastischen Elements in seiner Deformationsposition durch eine Schraubverbindung mit dem Trägerteil des Trägers oder mit dem Fahrgestell.
   Im Weiteren werden bevorzugte Ausführungsformen mit Bezugnahme auf die Zeichnungen näher erläutert. Es zeigen:
   - Figur 1: eine schematische perspektivische Ansicht einer ersten Ausführungsform eines erfindungsgemäßen Trägers,
   - Figur 2: eine perspektivische Ansicht einer zweiten Ausführungsform,
   - Figur 3: eine perspektivische Ansicht einer dritten Ausführungsform,
   - Figur 4: eine Schnittansicht einer weiteren Ausführungsform des Trägers bei der Montage in einem Kraftfahrzeug.

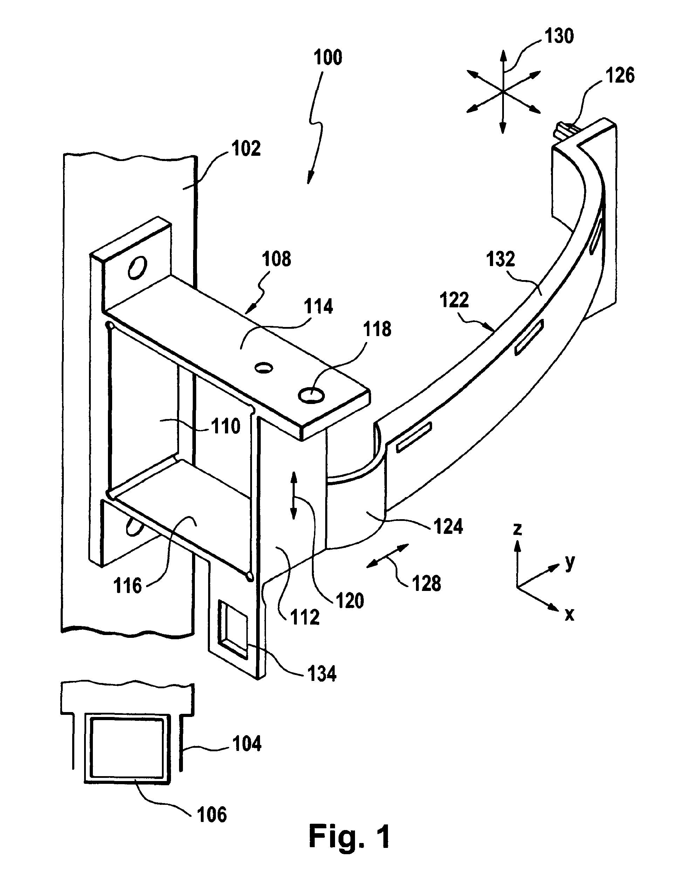

Die Figur 1 zeigt einen Träger 100 für eine Fronteinheit eines Kraftfahrzeugs (die Fronteinheit ist in der Figur 1 nicht dargestellt).

Der Träger 100 hat ein Trägerteil 102. Das Trägerteil 102 dient zur Verbindung des Trägers 100 mit einem Fahrgestell des Kraftfahrzeugs. Hierzu hat das Trägerteil 102 beispielsweise an seinem unteren Ende eine Halterung 104 zur Verbindung mit einem Längsträger 106 des Kraftfahrzeugs.

An dem Trägerteil 102 ist ein elastisches Element 108 angeordnet. Das elastische Element 108 ist in der hier betrachteten Ausführungsform parallelogrammartig ausgebildet. Das elastische Element 108 weist die im Wesentlichen jeweils parallel zueinander verlaufenden Schenkel 110, 112 sowie 114, 116 auf. Über seinen Schenkel 110 ist das elastische Element 108 zum Beispiel durch eine Schraubverbindung mit dem Trägerteil 102 fest verbunden.

Der Schenkel 114 des elastischen Elements 108 hat eine Auflagefläche 118 zur Einleitung einer Deformationskraft im wesentlichen in vertikaler Richtung, das heißt in -z-Richtung. Durch eine solche Deformationskraft kann das elastische Element 108 in Pfeilrichtung 120 deformiert werden.

An dem Schenkel 112 des elastischen Elements 108 ist ein Fassungsteil 122 über ein weiteres elastisches Element 124 befestigt. Das elastische Element 124 erlaubt einen Toleranzausgleich im Wesentlichen in seitliche, das heißt y-Richtung, wie durch den Pfeil 128 dargestellt.

An seinem Ende hat das Fassungsteil 122 einen Positionierstift 126 zum Eingriff in ein Montageloch eines Kotflügels. Da das Fassungsteil 122 eine gewisse Elastizität aufweist, hat der Positionierungsstift 126 verschiedene Freiheitsgrade, wie durch die Pfeile 130 in der Figur 1 gezeigt, so dass der Positionierstift 126 leicht in ein entsprechendes Montageloch an der Kotflügelbank eingeführt werden kann. Für den Toleranzausgleich in y-Richtung sorgt dabei das elastische Element 124, mit der das Fassungsteil 122 an dem elastischen Element 108 befestigt ist.

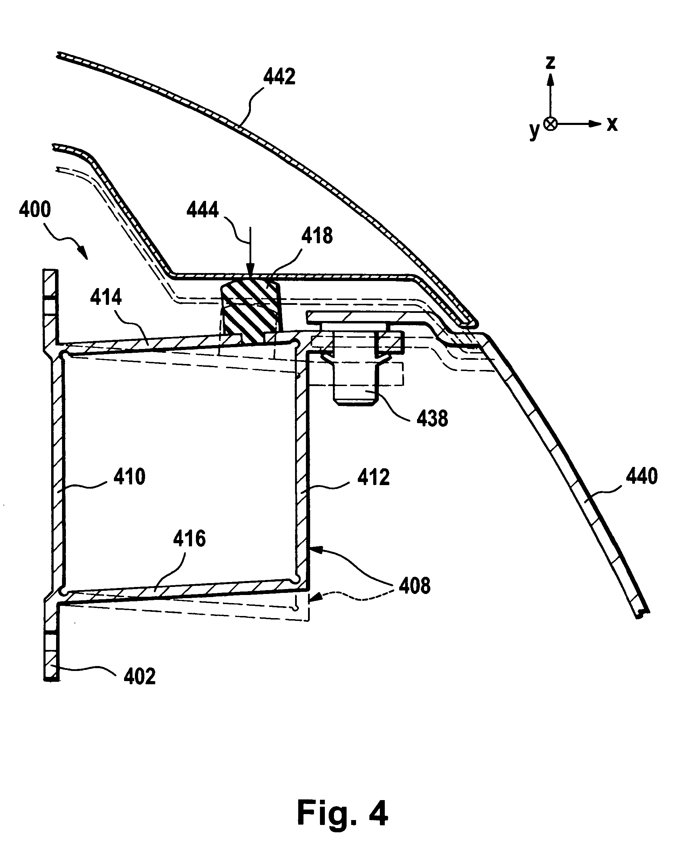

Das Fassungsteil 122 dient zur Aufnahme einer Scheinwerfereinheit (in den Figuren nicht dargestellt) sowie zur Befestigung eines Stoßfängers (vgl. Figur 4). Sowohl die Scheinwerfereinheit als auch der Stoßfänger werden mit Bezug auf eine obere Kante 132 des Fassungsteils 122 hieran befestigt, um ein qualitativ hochwertiges Fugenbild zu erreichen.

An einer von dem Schenkel 110 entfernten Position - in dem hier betrachten Ausführungsbeispiel an der Unterseite des Schenkels 116 - hat das elastische Element 108 eine Aufnahme 134 für eine Montageschraube. Nachdem das Trägerteil 102 an dem Fahrgestell, das heißt beispielsweise an dem Längsträger 106, des Kraftfahrzeugs vormontiert worden ist und das Fassungsteil 120 mittels des Positionierungsstifts 126 an einer der Kotflügelbänke vormontiert worden ist, wird eine Frontklappe (vgl. Figur 4) des Kraftfahrzeugs geschlossen, um eine Deformationskraft auf die Auflagefläche 118 auszuüben. Dadurch wird das elastische Element 108 in -z-Richtung deformiert.

In dieser Deformationsposition wird durch der Aufnahme 134 eine Schraubverbindung festgezogen, um das elastische Element in seiner Deformationsposition zu fixieren. Beispielsweise kann die Aufnahme 134 mit dem Trägerteil 102 oder mit einem Fahrgestellteil des Kraftfahrzeugs verschraubt werden. Dadurch kann ein Toleranzausgleich in z-Richtung erfolgen, so dass auch ein qualitativ hochwertiges Fugenbild mit Bezug auf die Frontklappe realisierbar ist, ohne die sonst oft erforderliche Justage der Verriegelungsvorrichtung für die Frontklappe und / oder anderer Nacharbeiten.

Die Figur 1 zeigt der Übersichtlichkeit halber lediglich die rechte Seite des Trägers mit seinem rechten elastischen Element 108 und seinem rechten Fassungsteil 122. Das Trägerteil 102 erstreckt sich auf die linke Fahrzeugseite und hat dort ein entsprechendes linkes elastisches Element und ein linkes Fassungsteil, welche symmetrisch zu den in der Figur 1 dargestellten Komponenten angeordnet sind.

Das Trägerteil 102 ist beispielsweise aus Metall oder einem Hybridmaterial. Das elastische Element 108 und das Fassungsteil 122 sind vorzugsweise als Kunststoffspritzgussteil zum Beispiel als Polypropylen oder aus Polyethylen gefertigt.

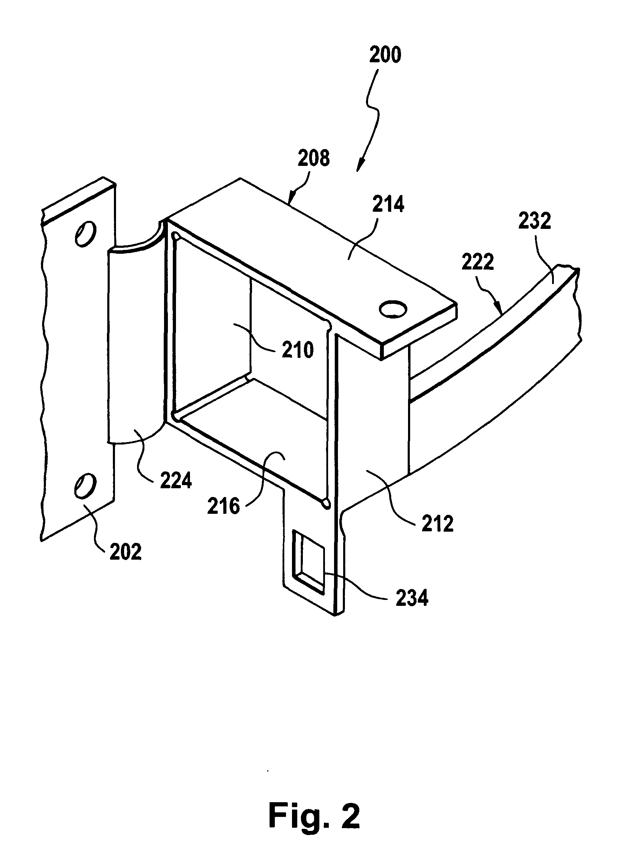

Die Figur 2 zeigt eine weitere Ausführungsform. Elemente der Figur 2, die Elementen der Figur 1 entsprechen, sind mit um 100 erhöhten Bezugszeichen gekennzeichnet. Bei der Ausführungsform der Figur 2 verbindet das elastische Element 224 das Trägerteil 202 und das elastische Element 208. Dies stellt eine Alternative zur Anordnung des entsprechenden elastischen Elements 124 nach der Ausführungsform der Figur 1 dar.

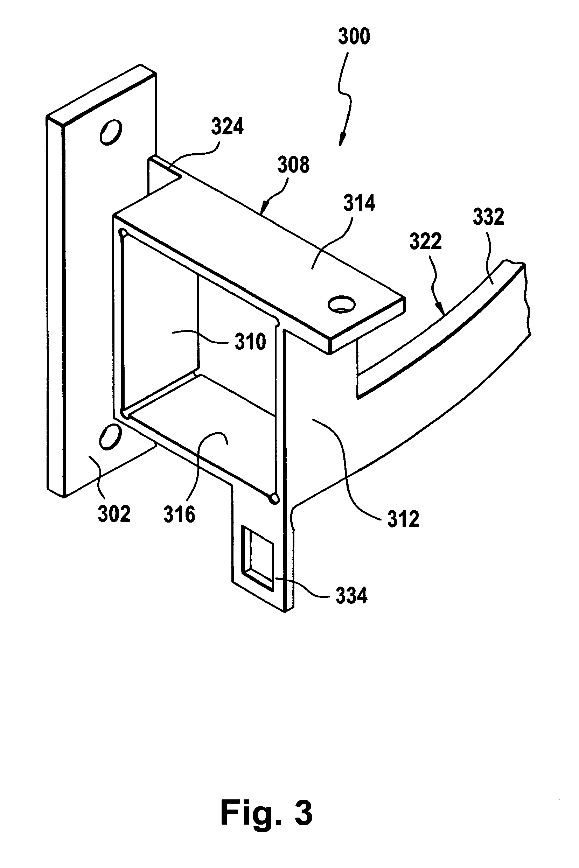

Die Figur 3 zeigt eine weitere Ausführungsform für die Anordnung des elastischen Elements 324. Elemente der Figur 3, die Elementen der Figur 2 entsprechen, sind wiederum mit 100 erhöhten Bezugszeichen gekennzeichnet.

Die Figur 4 zeigt eine weitere Ausführungsform eines erfindungsgemäßen Trägers 400. Elemente der Ausführungsform der Figur 4, die Elementen der Ausführungsformen der Figuren 1, 2 bzw. 3 entsprechen, sind wiederum mit entsprechend erhöhten Bezugszeichen gekennzeichnet. Die Figur 4 zeigt den Träger 400 in seiner nicht deformierten Form sowie mit gestrichelten Linien nach seiner Deformation.

Auf dem oberen Schenkel 414 des Trägers 400 ist ein Auflageelement 418 angeordnet, welches zum Beispiel aus Gummi oder aus Kunststoff besteht. Mittels eines Befestigungselements 438 ist ein Stoßfänger 440 an dem elastischen Element 408 und / oder an dem in der Figur 4 nicht gezeigten Fassungsteil befestigt.

Die Vormontage des Trägers 400 erfolgt bei geöffneter Frontklappe 442 des Kraftfahrzeugs. Nachdem der Träger 400 mit seinem Trägerteil 402 an dem Fahrgestell des Kraftfahrzeugs vormontiert worden ist, wird die Frontklappe 442 geschlossen, so dass diese eine Deformationskraft 444 über das Auflageelement 418 auf das elastische Element 408 ausübt. Durch diese Deformationskraft wird das elastische Element 408 in die gestrichelt gezeichnete Deformationsposition gebracht. In dieser Position wird das elastische Element 408 fixiert, wie zum Beispiel durch eine geeignete Schraubverbindung (vgl. hierzu zum Beispiel die Aufnahmen 134, 234 und 334 der Figuren 1, 2 bzw. 3).

In der nicht deformierten Position schließen die aufeinander stehenden Schenkel des elastischen Elements 408, also z. B. die Schenkel 410 und 414, einen Winkel von größer 90 Grad ein, so dass der Schenkel 414 leicht nach oben hervorsteht. Dadurch wird gewährleistet, dass beim Schließen der Frontklappe 442 in jedem Fall eine Deformation des elastischen Elements 408 erfolgt.

### Bezugszeichenliste

- 100: Träger
- 102: Trägerteil
- 104: Halterung
- 106: Längsträger
- 108: elastisches Element
- 110: Schenkel
- 112: Schenkel
- 114: Schenkel
- 116: Schenkel
- 118: Auflagefläche
- 120: Pfeilrichtung
- 122: Fassungsteil
- 124: elastisches Element
- 126: Positionierstift
- 128: Pfeil
- 130: Pfeil
- 132: obere Kante
- 134: Aufnahme
- 200: Träger
- 202: Trägerteil
- 208: elastisches Element
- 210: Schenkel
- 212: Schenkel
- 214: Schenkel
- 216: Schenkel
- 222: Fassungsteil
- 224: elastisches Element
- 232: obere Kante
- 234: Aufnahme
- 300: Träger
- 302: Trägerteil

- 308: elastisches Element
- 310: Schenkel
- 312: Schenkel
- 314: Schenkel
- 316: Schenkel
- 322: Fassungsteil
- 324: elastisches Element
- 332: obere Kante
- 334: Aufnahme
- 400: Träger
- 402: Trägerteil
- 408: elastisches Element
- 410: Schenkel
- 412: Schenkel
- 414: Schenkel
- 416: Schenkel
- 418: Auflageelement
- 438: Befestigungselement
- 440: Stoßfänger
- 442: Frontklappe
- 444: Deformationskraft

## Patentansprüche

1. Träger für eine Fronteinheit (440) eines Kraftfahrzeugs mit einem ersten Trägerteil (110; 210; 310; 410) zur Verbindung mit einem Fahrgestell (106) des Kraftfahrzeugs und linken und rechten Fassungsteilen (122; 222; 322), wobei die linken und rechten Fassungsteile jeweils zur Aufnahme einer Scheinwerfereinheit und zur Verbindung mit einem Stoßfänger (440) des Kraftfahrzeugs ausgebildet sind, und wobei die linken und rechten Fassungsteile mit linken und rechten elastischen Elementen (108; 208; 308; 408) mit dem ersten Trägerteil verbunden sind, **gekennzeichnet durch** Mittel (134; 234; 343) zur Fixierung der elastischen Elemente, welche ausgebildet sind, um die elastischen Elemente nach einer elastischen Deformation (444) in einer Montageposition relativ zu dem Fahrgestell zu fixieren, wobei die elastischen Elemente parallelogrammartig ausgebildet sind.

2. Träger nach Anspruch, 1 wobei die Mittel zur Fixierung zur Herstellung einer Schraubverbindung ausgebildet sind.

3. Träger nach Anspruch 1 oder 2, wobei die Mittel zur Fixierung zur Herstellung einer Verbindung mit dem ersten Trägerteil ausgebildet sind.

4. Träger nach einem der vorhergehenden Ansprüche, mit Mitteln (118; 418) zur Einleitung einer Deformationskraft (444) auf die elastischen Elemente in der Montageposition.

5. Träger nach Anspruch 4, wobei die Mittel zur Einleitung der Deformationskraft eine Auflage (118; 418) für eine Frontklappe (442) des Kraftfahrzeugs aufweisen, so dass die Deformationskraft bei geschlossener Frontklappe auf die elastischen Elemente wirkt.

6. Träger nach Anspruch 1, wobei die aufeinander stehenden Schenkel (410, 414; 416, 412) des parallelogrammartig ausgebildeten elastischen Elements vor der Deformation einen Winkel von > 90° einschließen.

7. Träger nach Anspruch 1 oder 6, wobei jedes der elastischen Elemente erste und zweite im wesentlichen parallel verlaufende Schenkelpaare (110, 114; 116, 112; 210, 214; 216, 212; 310, 314; 316, 312; 410, 414; 416, 412) aufweist, wobei ein erster Schenkel (110; 210; 310; 410) des ersten Schenkelpaares das betreffende elastische Element mit dem ersten Trägerteil (102; 202; 302; 402) verbindet, ein zweiter Schenkel (112; 212; 312; 412) des ersten Schenkelpaares das elastische Element mit einem der Fassungsteile (122; 222; 322) verbindet, und ein erster Schenkel (114; 214; 314; 414) des zweiten Schenkelpaars zur Einleitung der Deformationskraft von der Frontklappe ausgebildet ist.

8. Träger nach Anspruch 7, wobei der erste Schenkel des zweiten Schenkelpaars eine Auflagefläche (118; 418) für die Frontklappe aufweist.

9. Träger nach Anspruch 7 oder 8, wobei an einer von dem ersten Schenkel des ersten Schenkelpaars entfernten Position an dem elastischen Element eine Aufnahme (134; 234; 334) für eine Schraubverbindung zur Fixierung des elastischen Elements nach der elastischen Deformation angeordnet ist.

10. Träger nach einem der vorhergehenden Ansprüche, mit zweiten elastischen Elementen (124; 224; 324) zur Befestigung der Fassungsteile an dem ersten Trägerteil, wobei die zweiten elastischen Elemente für eine elastische Deformation in einer Richtung, die im wesentlichen senkrecht zu einer Richtung der elastischen Deformation der linken und rechten elastischen Elemente ist, ausgebildet sind.

11. Träger nach Anspruch 10, wobei zumindest eines der zweiten elastischen Elemente (124; 224; 324) zur Verbindung eines der Fassungsteile mit dem linken oder rechten elastischen Element ausgebildet ist.

12. Träger nach Anspruch 10 oder 11, wobei zumindest eines der zweiten elastischen Elemente (124; 224; 324) zur Verbindung des linken oder rechten elastischen Elements mit dem ersten Trägerteil ausgebildet ist.

13. Fronteinheit für ein Kraftfahrzeug mit einem Träger nach einem der vorhergehenden Ansprüche.

14. Verfahren zur Montage eines Trägers (100; 200; 300; 400) für eine Fronteinheit eines Kraftfahrzeugs, wobei der Träger ein erstes Trägerteil (102; 202; 302; 402) zur Verbindung mit einem Fahrgestell (106) des Kraftfahrzeugs und linke und rechte Fassungsteile (122; 222; 322) aufweist, wobei die linken und rechten Fassungsteile jeweils zur Aufnahme einer Scheinwerfereinheit und zur Verbindung mit einem Stoßfänger (440) des Kraftfahrzeugs ausgebildet sind, mit folgenden Schritten:
- Montage des ersten Trägerteils an dem Fahrgestell des Kraftfahrzeugs,
- elastische Deformation des Trägers durch Schließen einer Fronthaube (442) des Kraftfahrzeugs,
- Fixierung des Trägers in der sich daraus ergebenden Deformationsposition.

## Claims

1. Carrier for a front unit (440) of a motor vehicle with an initial first mounting component (110; 210; 310; 410) for connecting to a chassis (106) of the motor vehicle and to left and right holding components (122; 222; 322), with the left and right holding components each being designed for receiving a headlight unit and for connecting to a bumper (440) of the motor vehicle, and with the left and right holding components being connected to the initial mounting component with left and right elastic elements (108; 208; 308; 408), wherein instruments (134; 234; 343) for fixing the elastic elements are designed to fix the elastic elements in an assembly position relative to the chassis following an elastic deformation (444), the elastic elements being designed in the shape of a parallelogram.

2. Carrier of Claim 1, wherein the instruments for fixing are designed for establishing a screw connection.

3. Carrier of Claim 1 or 2, wherein the instruments for fixing are designed for establishing a connection with the initial mounting component.

4. Carrier of one of the previous claims, with instruments (118; 418) for introducing a deformation force (444) on the elastic elements in the assembly position.

5. Carrier of Claim 4, wherein the instruments for introducing the deformation force feature a support (118; 418) for an engine hood (442) of the motor vehicle, so that the deformation force impacts the elastic elements when the engine hood is closed.

6. Carrier of Claim 1, wherein the legs standing on top of each other (410, 414; 416, 412) of the elastic element designed like a parallelogram include an angle of >90° before the deformation.

7. Carrier of Claim 1 or 6, wherein each of the elastic elements features first and second pairs of legs running mainly parallel (110, 114; 116, 112; 210, 214; 216, 212; 310, 314; 316, 312; 410, 414; 416, 412), wherein a first leg (110; 210; 310; 410) of the first pair of legs connects the elastic element in question with the first mounting component (102; 202; 302; 402), a second leg (112; 212; 312; 412) of the first pair of legs connects the elastic element with one of the holding components (122; 222; 322), and a first leg (114; 214; 314; 414) of the second pair of legs is designed to initiate the deformation force from the engine hood.

8. Carrier of Claim 7, wherein the first leg of the second pair of legs features a support surface (118; 418) for the engine hood.

9. Carrier of Claim 7 or 8, wherein a receiver (134; 234; 334) for a screw connection is arranged on a position on the elastic element far [remote] from the first leg of the first pair of legs for fixing the elastic element after the elastic deformation.

10. Carrier of one of the previous claims, with second elastic elements (124; 224; 324) for fastening the holding components to the first mounting component, wherein the second elastic elements are designed for an elastic deformation in a direction which is essentially vertical to a direction of the elastic deformation of the left and right elastic elements.

11. Carrier of Claim 10, wherein at least one of the second elastic elements (124; 224; 324) is designed for connecting one of the holding components with the left or right elastic element.

12. Carrier of Claim 10 or 11, wherein at least one of the second elastic elements (124; 224; 324) is designed for connecting the left or right elastic element with the first mounting component.

13. Front unit for a motor vehicle with a carrier according to one of the previous claims.

14. Method for mounting a carrier (100; 200; 300; 400) for a front unit of a motor vehicle, wherein the carrier features a first mounting component (102; 202; 302; 402) for connecting to a chassis (106) of the motor vehicle and left and right holding components (122; 222; 322), wherein the left and right holding components are each designed for accepting a headlight unit and for connecting to a bumper (440) of the motor vehicle, with the following steps:
- Mounting the first mounting component on the chassis of the motor vehicle,
- Elastic deformation of the carrier by means of closing a front hood (442) of the motor vehicle,
- Fixing the carrier in the resulting deformation position.

## Revendications

1. Support pour une unité frontale (440) d'un véhicule automobile, comprenant un premier élément support (110 ; 210 ; 310 ; 410) pour l'assemblage avec un châssis (106) du véhicule automobile et des éléments de montage gauches et droits (122 ; 222 ; 322), les éléments de montage gauches et droits étant respectivement configurés pour loger une unité de phares et pour l'assemblage avec un pare-chocs (440) du véhicule automobile, et les éléments de montage gauches et droits étant assemblés par des éléments élastiques gauches et droits (108 ; 208 ; 308 ; 408) avec le premier élément support, **caractérisé par** des moyens (134 ; 234 ; 334) pour la fixation des éléments élastiques, lesquels sont réalisés pour fixer les éléments élastiques, après une déformation élastique (449), dans une position de montage par rapport au châssis, les éléments élastiques étant configurés à la manière d'un parallélogramme.

2. Support suivant la revendication 1, dans lequel les moyens de fixation sont réalisés pour créer un assemblage par vis.

3. Support suivant l'une des revendications 1 et 2, dans lequel les moyens de fixation sont réalisés pour créer un assemblage avec le premier élément support.

4. Support suivant l'une des revendications précédentes, comprenant des moyens (118 ; 418) pour transmettre une force de déformation (444) aux éléments élastiques dans la position de montage.

5. Support suivant la revendication 4, dans lequel les moyens de transmission de la force de déformation présentent un appui (118 ; 418) pour un volet frontal (442) du véhicule automobile, de sorte que la force de déformation agit sur les éléments élastiques en position de fermeture du volet frontal.

6. Support suivant la revendication 1, dans lequel les branches (410, 414 ; 416, 412), situées les unes sur les autres, de l'élément élastique configuré à la manière d'un parallélogramme forment un angle > 90° avant la déformation.

7. Support suivant l'une des revendications 1 et 6, dans lequel chacun des éléments élastiques comporte des premières et des secondes paires de branches (110, 114 ; 116, 112 ; 210, 214 ; 216, 212 ; 310, 314 ; 316, 312 ; 410, 414 ; 416, 412) s'étendant de façon essentiellement parallèle, une première branche (110 ; 210 ; 310 ; 410) de la première paire de branches assemblant l'élément élastique concerné avec le premier élément support (102 ; 202 ; 302 ; 402), une seconde branche (112 ; 212 ; 312 ; 412) de la première paire de branches assemblant l'élément élastique avec l'un des éléments de montage (122 ; 222 ; 322), et une première branche (114 ; 214 ; 314 ; 414) de la seconde paire de branches étant configurée pour transmettre la force de déformation par le volet frontal.

8. Support suivant la revendication 7, dans lequel la première branche de la seconde paire de branches présente une surface d'appui (118 ; 418) pour le volet frontal.

9. Support suivant l'une des revendications 7 et 8, dans lequel, en une position distante de la première branche de la première paire de branches, un logement (134 ; 234 ; 334) est disposé sur l'élément élastique pour un assemblage par vis destiné à la fixation de l'élément élastique après la déformation élastique.

10. Support suivant l'une des revendications précédentes, comprenant des seconds éléments élastiques (124 ; 224 ; 324) pour la fixation des éléments de montage sur le premier élément support, les seconds éléments élastiques étant configurés pour une déformation élastique dans une direction, qui est essentiellement perpendiculaire à une direction de la déformation élastique des éléments élastiques gauches et droits.

11. Support suivant la revendication 10, dans lequel au moins l'un des seconds éléments élastiques (124 ; 224 ; 324) est configuré pour l'assemblage de l'un des éléments de montage avec l'élément élastique gauche ou droit.

12. Support suivant l'une des revendications 10 et 11, dans lequel au moins l'un des seconds éléments élastiques (124 ; 224; 324) est configuré pour l'assemblage de l'élément élastique gauche ou droit avec le premier élément support.

13. Unité frontale pour un véhicule automobile comprenant un support suivant l'une des revendications précédentes.

14. Procédé de montage d'un support (100 ; 200 ; 300 ; 400) pour une unité frontale d'un véhicule automobile, dans lequel le support comporte un premier élément support (102 ; 202 ; 302 ; 402) pour l'assemblage avec un châssis (106) du véhicule automobile et des éléments de montage gauches et droits (122 ; 222; 322), les éléments de montage gauches et droits étant respectivement configurés pour loger une unité de phares et pour l'assemblage avec un pare-chocs (440) du véhicule automobile, comprenant les étapes suivantes:
- montage du premier élément support sur le châssis du véhicule automobile,
- déformation élastique du support par fermeture d'un capot frontal (442) du véhicule automobile,
- fixation du support dans la position de déformation résultante.
